# EUROPEAN PATENT APPLICATION

(11) **EP 4 782 118 A1**
(43) Date of publication of application: **29.07.2026**
(21) Application number: 24868134.8
(22) Date of filing: 05.09.2024
(51) Int. Cl.: B09B 3/25, B01J 20/04, B09C 1/08, C09K 3/00, B09B 101/30

(54) **INSOLUBILIZING MATERIAL FOR SPECIFIC HARMFUL SUBSTANCE (INCLUDING HEAVY METAL)**

(30) Priority: 22.09.2023 JP 2023158283
(71) Applicant: Yoshino Gypsum Co., Ltd., Tokyo 100-0005 (JP)
(72) Inventor: YAMAMOTO, Takeshi, Tokyo 100-0005 (JP); UESHIMA, Masato, Tokyo 100-0005 (JP)
(74) Representative: Wächtershäuser & Hartz Patentanwaltspartnerschaft mbB
(86) International application number: PCT/JP2024/031865
(87) International publication number: WO 2025/063056

(57) **Abstract**

There is provided a highly practical insolubilizing material that, when applied to contaminated soil, flying ash, or the like containing a heavy metal or the like, brings about a useful effect such that leaching of the heavy metal or the like can be suppressed far more quickly as compared to conventional insolubilizing materials. The insolubilizing material is an insolubilizing material for a designated hazardous substance (a heavy metal or the like), the insolubilizing material containing at least an alumina cement powder and a gypsum powder. Preferably, in the insolubilizing material, the amount of the gypsum based on 1 mol of tricalcium aluminate (C₃A) in the alumina cement is within a range of 0.3 mol to 6.4 mol. The insolubilizing material exhibits more useful effect such that even fluorine and boron, which have been hard to insolubilize among the heavy metals and the like with conventional insolubilizing materials, can be effectively insolubilized.

## Description

### Technical Field

The present invention relates to an insolubilizing material for a designated hazardous substance (also referred to as "heavy metal or the like." The details will be described later.). In more detail, the present invention relates to a technique that provides a useful insolubilizing material for a designated hazardous substance capable of effectively suppressing leaching of a heavy metal or the like from contaminated soil or flying ash containing the heavy metal or the like and particularly capable of quickly and effectively insolubilizing the heavy metal or the like in a shorter time (for example, within 6 hours) as compared to conventional insolubilizing materials.

### Background Art

As materials that require soil contamination counter measures, Class II designated hazardous materials (heavy metals and the like) are specified, and the leaching standards thereof to water are specified respectively. Currently, as the heavy metals and the like, cadmium and compounds thereof, hexavalent chromium compounds, cyanides compounds, mercury and compounds thereof (including alkylmercury), selenium and compounds thereof, lead and compounds thereof, arsenic and compounds thereof, fluorine and compounds thereof, and boron and compounds thereof are specified.

Conventionally, insolubilizing materials for suppressing leaching of a heavy metal or the like from contaminated soil and the like containing any of the heavy metals and the like given above have been proposed and used. For example, Patent Literatures 1 and 2 each propose an insolubilizing material utilizing a partial hydrate of light-burned magnesia in which part of light-burned magnesia obtained by firing a mineral at 550 to 1,400°C is hydrated.

### Citation List

### Patent Literature

Patent Literature 1: Japanese Patent No. 4481360
Patent Literature 2: Japanese Patent No. 4343259

### Summary of Invention

### Technical Problem

The present inventors have found that there are the following problems to be solved in the process of studying the above-described conventional techniques and the like. Firstly, the present inventors have paid attention to the fact that in the above-described conventional techniques, the insolubilizing material is added to contaminated soil to obtain amended soil having a curing age of 7 days. In the conventional techniques, the insolubilizing material is added to the material to be treated after the water is added to the insolubilizing material, and therefore curing takes several days after the insolubilizing material is mixed, and thus the present inventors have found a major practical problem that it takes long hours to insolubilize a heavy metal or the like. Unless the heavy metal or the like is insolubilized quickly, it is difficult to perform sufficient insolubilization treatment when a large amount of contaminated soil needs to be treated or other cases. This means that there is an urgent need for a technique that makes curing time for insolubilization short as much as possible, desirably a technique that makes the curing period unnecessary. Facing this problem, the present inventors have considered that when quick and effective insolubilization treatment can be realized by adding an insolubilizing material, as a powder, to contaminated soil, the curing period after the addition of the insolubilizing material becomes unnecessary. That is, the present inventors have recognized the importance of development of an insolubilizing material that acts, as a powder, quickly to the heavy metals and the like in contaminated soil to perform effective insolubilization. Furthermore, the conventional techniques utilizing the above-described partial hydrate of light-burned magnesia have another problem that, for example, if the insolubilizing material is used for the contaminated soil when a flood disaster occurs, the insolubilizing material added is carried away by water. In addition, the present inventors have also recognized a tendency that large amounts of heavy metals and the like are contained in soot and dust called flying ash collected with a dust collector at an exhaust gas outlet and a need for development of a simple technique that makes it possible to perform insolubilization treatment on flying ash, as well as contaminated soil, to quickly prevent the heavy metals and the like from leaching.

Accordingly, an object of the present invention is to provide a highly practical insolubilizing material that, when applied to contaminated soil, flying ash, or the like containing a heavy metal or the like, brings about a useful effect such that leaching of the heavy metal or the like can be suppressed far more quickly as compared to conventional insolubilizing materials. More specifically, the object of the present invention is to provide a highly practical, useful insolubilizing material that, when applied to contaminated soil, flying ash, or the like, quickly and effectively insolubilize the heavy metal or the like in a short time as short as about 6 hours, which is the time at least necessary for a leaching test for confirming leaching of the heavy metal or the like. That is, the object of the present invention is to develop a novel insolubilizing material that can realize quick insolubilization in which a long curing period is unnecessary unlike the conventional insolubilizing materials. Particularly, when an insolubilizing material that can realize quick insolubilization by applying the insolubilizing material as a powder as it is to contaminated soil, flying ash, or the like is developed, leaching of the heavy metal or the like from contaminated soil due to rain during the curing period, which is a problem of the conventional insolubilizing materials, can be effectively suppressed, and therefore the insolubilizing material of the present invention can be utilized as a useful insolubilizing material whose practicability is enhanced more. In addition, another object of the present invention is to provide an insolubilizing material that exhibits more excellent and useful effect such that even fluorine and boron, which have been hard to insolubilize among the heavy metals and the like with conventional insolubilizing materials, can be effectively insolubilized.

### Solution to Problem

The above objects can be achieved by the following present invention. Specifically, the present invention provides the following insolubilizing material.
[1] An insolubilizing material for a designated hazardous substance (a heavy metal or the like), the insolubilizing material containing at least an alumina cement powder and a gypsum powder.

Preferred embodiments of the above-described insolubilizing material for a designated hazardous substance (a heavy metal or the like) of the present invention include the following.
[2] The insolubilizing material for a designated hazardous substance (a heavy metal or the like) according to [1], wherein the amount of the gypsum based on 1 mol of tricalcium aluminate (C₃A) in the alumina cement is within a range of 0.3 mol to 6.4 mol.
[3] The insolubilizing material for a designated hazardous substance (a heavy metal or the like) according to [1] or [2], to be used by being added, as a powder as it is, to contaminated soil or fly ash containing a designated hazardous substance (a heavy metal or the like).
[4] The insolubilizing material for a designated hazardous substance (a heavy metal or the like) according to any one of [1] to [3], wherein the designated hazardous substance is at least any one of the substances selected from the group consisting of cadmium and compounds thereof, hexavalent chromium compounds, cyanides compounds, mercury and compounds thereof (including alkylmercury), selenium and compounds thereof, lead and compounds thereof, arsenic and compounds thereof, fluorine and compounds thereof, and boron and compounds thereof.

### Advantageous Effects of Invention

The present invention realizes providing an effective insolubilizing material by which a sufficient effect of suppressing leaching of the heavy metal or the like can be confirmed far more quickly, specifically 6 hours later, which is necessary for a leaching test that is conducted for confirming insolubilization, as compared to conventional insolubilizing materials when applied to contaminated soil or flying ash containing a heavy metal or the like. This means that the present invention makes it possible to provide an insolubilizing material capable of insolubilizing the heavy metal or the like satisfactorily before 6 hours, which is necessary for conducting a leaching test. In addition, the present invention makes it possible to provide an insolubilizing material that can suppress leaching of the heavy metal or the like from contaminated soil due to rain during the curing period, which is a problem of conventional insolubilizing agents, because the heavy metal or the like can be quickly insolubilized by mixing the insolubilizing material as a powder as it is into contaminated soil, flying ash, or the like and therefore a long curing period is unnecessary. Furthermore, the present invention makes it possible to provide an insolubilizing material that exhibits highly practical and more useful effect such that even fluorine and boron, which have been hard to insolubilize among the heavy metals and the like with conventional insolubilizing materials, can be effectively insolubilized. In terms of a material to be used, the present invention can also bring about an industrially important effect that an insolubilizing material excellent in performance can be provided economically.

### Brief Description of Drawings

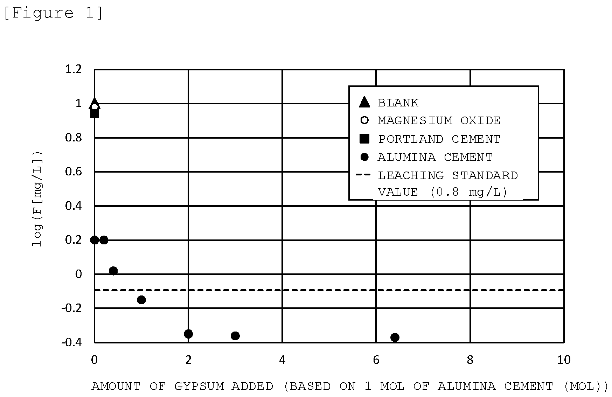

[Figure 1] Figure 1 is a graph showing a correlation between the amount of gypsum based on 1 mol of alumina cement in insolubilizing materials and the fluorine concentration in the filtrates obtained in leaching tests, and the effectiveness of the formulation of insolubilizing material of the present invention is confirmed from the graph.

### Description of Embodiments

Hereinafter, the present invention will be described in detail giving preferred embodiments of the present invention. An insolubilizing material of the present invention contains at least an alumina cement powder and a gypsum powder. The present inventors have found that when the alumina cement powder and the gypsum powder are used in combination, thereby a heavy metal or the like contained in contaminated soil or flying ash can be quickly insolubilized and in addition, fluorine and boron, which have been hard to insolubilize with conventional insolubilizing materials, can be effectively insolubilized, and thus the present inventors have reached the present invention.

The present inventors consider that the effects of the present invention that are obtained by using the alumina cement powder and the gypsum powder in combination and that have never been found in the past have realized by the following mechanism of insolubilizing the heavy metal or the like. When the insolubilizing material of the present invention is applied to and mixed/kneaded with an object to be treated, such as contaminated soil or flying ash, tricalcium aluminate (3CaO·Al₂O₃, abbreviation; C₃A) which is the main component of the alumina cement powder, calcium sulfate in the gypsum powder, and water contained in the soil, the flying ash, or the like cause a hydration reaction at normal temperature under a moderate to weak alkaline environment to quickly produce ettringite. Then, the heavy metal or the like contained in the contaminated soil, flying ash, or the like is incorporated into the crystal structure of ettringite in the crystal growth process of ettringite by using the alumina cement powder and the gypsum powder in combination, further the heavy metal or the like contained in the contaminated soil, flying ash, or the like is adsorbed onto the surface of ettringite after the growth of ettringite is completed, and thus it is considered that quick insolubilization can be realized. According to studies conducted by the present inventors, when the insolubilizing material of the present invention using the alumina cement powder and the gypsum powder in combination is applied, thereby it has been confirmed that the following effect that has never been found in the past is obtained. That is, according to the insolubilizing material of the present invention, any of the heavy metals and the like, specifically cations such as cadmium (Cd) and lead (Pb), and anions such as arsenic (As) and fluorine (F), can be insolubilized effectively and quickly.

Regarding the above-described formulation and effects of the present invention, it is known that the ettringite crystal adsorbs/fixes the heavy metal or the like, but there are no precedents of investigating and proposing the use of alumina cement and gypsum in combination for the purpose of insolubilizing the heavy metal or the like contained in contaminated soil, flying ash, or the like. Hereinafter, the materials that form the insolubilizing material of the present invention will be described.

### <Alumina Cement Powder>

Alumina cement is generally produced by melting a mixed powder of bauxite that is a raw material for alumina and limestone at a high temperature (1,500°C to 1,600°C). The main component is tricalcium aluminate (C₃A). Alumina cement has properties such as that it is quickly set even at a low temperature to give required strength and that it is excellent in chemical resistance and fire resistance. On the other hand, alumina cement is expensive as compared to ordinary cement and therefore is not suitable for general uses, but it has the above-described properties that ordinary cement never has and therefore is used for limited uses such as urgent construction works, construction works at cold districts, construction works at chemical plants, and fireresistant products. The present invention proposes unprecedented novel utilization of alumina cement. In the insolubilizing material of the present invention, alumina cement is used as a powder. The average particle size of the alumina cement which is used in the present invention is not particularly limited, but the alumina cement is preferably powdery because the insolubilizing material is used through mixing/kneading with an object to be treated, such as contaminated soi or flying ash containing the heavy metal or the like. Commercially available alumina cement has an average particle size of about 5.0 µm and is used satisfactorily in the present invention.

### <Gypsum Powder>

As gypsum that forms the insolubilizing material of the present invention, any of gypsum selected from the group consisting of anhydrite, gypsum hemihydrate (α and β), and gypsum dihydrate can be utilized. The raw materials (sources) of these types of gypsum are not particularly limited and may be any of natural gypsum, by-products from thermal power stations and the like, and waste gypsum boards. According to studies conducted by the present inventors, as for an influence on the effects which are the targets of the insolubilizing material of the present invention, it has been recognized that the effects tend to be higher in the order of gypsum hemihydrate (α and β) > gypsum dihydrate > anhydrite in terms of types of the gypsum raw material that forms the insolubilizing material.

In addition, in the insolubilizing material of the present invention, gypsum is used as a powder in the same manner as alumina cement. The particle size of the gypsum powder is not particularly limited, and commercially available gypsum powders can be utilized. A gypsum powder having an average particle size of, for example, 200 µm or smaller, preferably 150 µm or smaller, can be suitably utilized. A gypsum powder whose particle size is too fine is difficult to handle, and therefore a gypsum powder having an average particle size of 1 µm or larger is preferably used. Anyway, powdery gypsum, when used as an insolubilizing material for contaminated soil, flying ash, or the like containing the heavy metal or the like, quickly reacts with the powdery alumina cement which is used in combination to function as an effective insolubilizing material for a designated hazardous substance (a heavy metal or the like).

### <Amount of Gypsum Powder Based on 1 Mol of Alumina Cement Powder>

Description will be made on preferred amount of the gypsum powder based on 1 mol of the alumina cement powder in the insolubilizing material of the present invention. Firstly, as shown below, to produce ettringite necessary for obtaining the effects of the present invention, gypsum in an amount 3 times of the number of moles of C₃A in the alumina cement is needed theoretically.

C₃A + 3CaSO₄·nH₂O + mH₂O = C₃A·3CaSO₄·32H₂O (ettringite)

However, when Ca²⁺ ions, SO₄²⁻ ions, and the like are contained in contaminated soil, flying ash, or the like, which is an object to be treated, in the case where the above-described theoretically necessary amount of the gypsum powder is used to the alumina cement powder, the amount of gypsum to alumina cement is excessive. This means that the amount of the treated object, such as treated soil or flying ash, containing the insolubilizing material after insolubilization treatment is uselessly large and therefore the load on secondary treatment increases. In addition, when Ca²⁺ ions and SO₄²⁻ ions are excessive, they deprive the sites where a designated hazardous substance (a heavy metal or the like) can be adsorbed in the ettringite structure to inhibit insolubilization. Accordingly, the amount of the gypsum powder to be used in combination with the alumina cement powder is preferably determined taking the amount of Ca²⁺ ions and SO₄²⁻ ions contained in an object to be treated into consideration.

According to studies conducted by the present inventors, in the insolubilizing material of the present invention, the mixing amount of gypsum based on 1 mol of tricalcium aluminate (C₃A) which is the main component of alumina cement is preferably within a range of, for example, 0.3 mol to 6.4 mol, more preferably 0.3 mol to 3.2 mol, even more preferably 1.0 mol to 3.2 mol. As described above, alumina cement is expensive as compared to ordinary cement, and therefore according to the present invention utilizing the gypsum powder, an insolubilizing material excellent in economic efficiency can be realized. For example, as for the amount of the gypsum powder based on the amount of the alumina cement powder, the gypsum powder is preferably mixed within a range of about 50 parts to about 100 parts based on 100 parts of the alumina cement powder on a mass basis. More preferably, the gypsum powder is mixed within a range of about 50 parts to about 500 parts, even more preferably within a range of about 150 parts to about 500 parts, based on 100 parts of the alumina cement powder, on a mass basis.

### <Other Additives>

The insolubilizing material of the present invention contains an alumina cement powder and a gypsum powder, and if necessary, other additives can be added within a range not impairing the objects of the present invention. Examples of the additives include insolubilizing materials utilizing light-burned magnesia proposed and used in conventional techniques. As described above, the conventional light-burned magnesia-based insolubilizing materials have a practical problem that it takes long hours to insolubilize the heavy metal or the like but have a performance of insolubilizing the heavy metal or the like. In addition, the conventional light-burned magnesia-based insolubilizing materials do not affect the above-described quick reaction between powdery gypsum and alumina cement which characterize the present invention in the insolubilizing material of the present invention and therefore can be used in combination with the insolubilizing material of the present invention.

### Examples

Hereinafter, the present invention will be described specifically based on Examples and Comparative Examples, but the present invention is not limited to these Examples. Note that "parts" and "%" in Examples and Comparative Examples are each on a mass basis unless otherwise noted.

### (Leaching Test Method for Heavy Metal or The Like)

Firstly, a leaching test method used when the effects due to the insolubilizing material of the present invention were checked is described. In the present invention, the test was conducted based on Leaching Test Method in Notification No.46, Ministry of the Environment, 1991 to check the effects of suppressing leaching of the heavy metal or the like due to the insolubilizing material. The outline of the leaching test method is as follows. The test object which is an object to be treated was dried and thereafter passed through a 2 mm sieve and then mixed with the insolubilizing material (powder). After the mixing, a solvent (distilled water) for leaching tests 10 times the amount of the test object obtained above was immediately added to the resultant mixture to prepare suspended matter, and then the following leaching operation was performed.

The suspended matter obtained above was continuously shaken and mixed under conditions of 6 hours, 200 times/minute, and a shaking width of 4 to 5 cm to perform leaching operation. Thereafter, the suspended matter was subjected to centrifugal separation and filtrated with a 0.45 µm membrane filter, and then the resulting filtrate was used as a sample for measurement, which is for checking the concentration of the heavy metal or the like leached out. The amount of the heavy metal or the like contained in the sample for measurement was quantitated by an analysis method, such as ICP atomic emission spectroscopy (ICP-AES), ion chromatography (IC), or atomic absorption spectroscopy (AAS), and thus the leaching concentration was determined.

### [Test Example 1] (Test for Checking Leaching of Fluorine from Flying Ash)

Flying ash discharged from a coal-fired boiler was used as a specimen. Based on the above-described leaching test method, the flying ash was used as the test object and distilled water was used as the solvent for leaching tests to obtain a sample (suspended matter) for performing the above-described leaching operation. Each of the following insolubilizing materials was used as an insolubilizing material to be mixed with the flying ash used when the sample (suspended matter) for performing the leaching operation was obtained, to check the differences in the effect of suppressing leaching of fluorine (F) from the flying ash arising from the differences in the formulation of the insolubilizing materials.

Firstly, in any of the insolubilizing materials, 0.5% of the alumina cement powder was contained on a mass basis in the flying ash, which is the specimen, in a state where the alumina cement powder was kneaded with the flying ash. Then, insolubilizing materials were prepared by changing the amount of the gypsum powder which was used in combination with the alumina cement powder to 0, 0.1, 0.3, 1.0, 2.0, 3.0, and 6.4 mol respectively based on 1 mol of tricalcium aluminate (C₃A), which is the main component of alumina cement, and thus samples (suspended matter) for performing the leaching operation were obtained using the insolubilizing materials respectively. The alumina cement powder for obtaining the suspended matter is DENKA ALUMINA CEMENT NO.1 (trade name) manufactured by Denka Company Limited. In this alumina cement powder, the content of C₃A in alumina cement is about 100%. In addition, the gypsum used for obtaining the suspended matter is Calcined gypsum (Cica 1st Grade) manufactured by KANTO CHEMICAL CO., INC.

Next, the above-described leaching operation was performed on each of the samples (suspended matter) obtained using insolubilizing materials in which the amount of the gypsum powder used is different as described above. After the leaching operation, samples for measurement, which are for measuring the leaching concentration in filtrates, were obtained respectively in the same manner as described above. The fluorine (F) concentration in each filtrate was measured for each of the obtained samples for measurement by ion chromatography (manufactured by Shimadzu Corporation). The measurement results are shown by a graph in Figure 1. The vertical axis of the graph shown in Figure 1 is the fluorine concentration (mg/L) in the filtrate, plotted in logarithmic representation. The transverse axis is the number of moles of the gypsum powder used in combination, based on 1 mol of C₃A, which is the main component in the alumina cement powder. Figure 1 shows the fluorine concentrations of the filtrates when the above-described leaching test was performed as a blank using only the flying ash, which is a specimen; and when the above-described leaching test was performed on the suspensions obtained by mixing a Portland cement powder, a magnesium oxide powder, or a gypsum powder in the flying ash, which is a specimen, without using the alumina cement powder in the formulation of the insolubilizing materials.

As shown in Figure 1, the results of the leaching tests for fluorine, performed on the samples obtained by using and mixing Portland cement and magnesium oxide respectively in the flying ash, which is a specimen, were almost the same as the blank where the leaching test was performed on only the flying ash, which is a specimen. In addition, when only the gypsum was mixed in the flying ash, which is a specimen, without using the alumina cement in combination, a remarkable effect of suppressing leaching was also not recognized in the leaching test for fluorine. From these facts, it was confirmed that the effect of suppressing leaching of fluorine from the flying ash, which is a specimen, was hardly recognized when any of the above-described substances was mixed.

In contrast to the above, the result of the leaching test for fluorine performed on the sample obtained by mixing alumina cement in the flying ash, which is a specimen, was such that, as shown in Figure 1, the concentration of fluorine leached decreased significantly without using the gypsum powder in combination, and therefore it was confirmed that alumina cement was effective as a substance forming the insolubilizing material for a heavy metal or the like. Note that, as described above, the concentration of fluorine leached hardly decreased with only the gypsum powder.

On the other hand, the leaching operation was performed on the samples obtained by mixing, in the flying ash, which is a specimen, the insolubilizing materials of the present invention in which the gypsum powder was added to and used in combination with the alumina cement powder, and the measurement results of the fluorine concentrations in the filtrates obtained after the leaching operation are shown in Figure 1. As a result, it was found that, as shown in Figure 1, by using the insolubilizing material of the present invention, leaching of fluorine contained in the flying ash was able to be reduced more significantly. It was found that particularly in the present invention, as shown in Figure 1, gypsum is preferably contained within a range of 0.3 mol to 6.4 mol based on 1 mol of C₃A which is the main component of the alumina cement powder and thereby an enhanced effect of reducing leaching of fluorine is obtained. Gypsum is more preferably contained within a range of 1.0 mol to 6.4 mol, even more preferably within a range of 1.5 mol to 3.0 mol, based on 1 mol of C₃A which is the main component of the alumina cement powder. Such formulation makes it possible to obtain the effect of reducing the concentration of fluorine leached more stably at a higher level without using gypsum excessively. As just described above, according to the present invention, the use of the gypsum powder in combination makes it possible to more effectively obtain the effect of reducing the concentration of fluorine leached while the amount of the alumina cement powder used is reduced. This means that an industrially useful effect is obtained that makes it possible to provide an insolubilizing material excellent in economic efficiency by using the gypsum powder in combination, because alumina cement is expensive.

As shown in Figure 1, the leaching standard value for fluorine is 0.8 mg/L. As shown in Figure 1, when about 1.0 mol of the gypsum powder was added based on 1 mol of C₃A, which is the main component of the alumina cement powder, to use the alumina cement powder and the gypsum powder in combination, and the resultant mixture was mixed/kneaded with the flying ash, which is a specimen, the concentration of fluorine leached easily satisfied the above-described leaching standard. On the other hand, it was confirmed that even when more than 6.4 mol of gypsum based on 1 mol of tricalcium aluminate (C₃A) in alumina cement was used, the enhancement of the effect of suppressing leaching of fluorine was small. Note that in this case, a large amount of gypsum is contained in the flying ash after the treatment, which increases the load on the secondary treatment of an object to be treated, and therefore this case is also not preferable in this point.

### [Test Example 2] (Test for Checking Leaching of F, Cd, Pb, As from Artificially Contaminated Soil)

As specimens to be treated, artificially contaminated soils were each prepared in such a way that a given designated hazardous substance to be a test object was added to a 200 to 300 mesh silica powder, and the artificially contaminated soils were used for the following leaching test. Based on 100 parts by mass of the above-described artificially contaminated soils, the alumina cement powder forming the insolubilizing material was contained in an amount of 0.5%. Furthermore, the insolubilizing material in which the amount of the gypsum powder used in combination with the alumina cement powder in the insolubilizing material was 3.0 mol based on 1 mol of tricalcium aluminate (C₃A), which is the main component of the alumina cement powder, was used. The leaching test was conducted by the same procedures as in Test Example 1. Regarding the resulting samples for measurement, the concentration of fluorine leached was measured by ion chromatography in the same manner as in Test Example 1. The concentrations of cadmium (Cd), lead (Pb), and arsenic (As) leached were measured by atomic absorption spectroscopy. The obtained results are shown in Table 1. Note that "<0.01" for cadmium (Cd) and lead (Pb) in Table 1 indicates that the concentration of Cd or Pb leached was smaller than the lower limit of detection. Note that the time necessary for the leaching test is 6 hours, and therefore from the results in Table 1, it was confirmed that the use of the insolubilizing material of the present invention makes it possible to well insolubilize all of fluorine (F) and arsenic (As) (both are anions), and cadmium (Cd) and lead (Pb) (both are cations) within this short time.

**Table 1: Leaching test results for F, Cd, Pb, and As**

| Heavy metal or the like | Concentration (mg/l) | |
|---|---|---|
| | In artificially contaminated soil for leaching test | In filtrate after leaching test |
| F | 3.0 | 0.0190 |
| As | 0.1 | 0.0018 |
| Cd | 0.1 | <0.001 |
| Pb | 0.1 | <0.001 |

## Claims

1. An insolubilizing material for a designated hazardous substance (a heavy metal or the like), the insolubilizing material comprising at least an alumina cement powder and a gypsum powder.

2. The insolubilizing material for a designated hazardous substance (a heavy metal or the like) according to claim 1, wherein the amount of the gypsum based on 1 mol of tricalcium aluminate (C₃A) in the alumina cement is within a range of 0.3 mol to 6.4 mol.

3. The insolubilizing material for a designated hazardous substance (a heavy metal or the like) according to claim 1 or 2, to be used by being added, as a powder as it is, to contaminated soil or fly ash containing a designated hazardous substance (a heavy metal or the like).

4. The insolubilizing material for a designated hazardous substance (a heavy metal or the like) according to claim 1 or 2, wherein the designated hazardous substance is at least any one of the substances selected from the group consisting of cadmium and compounds thereof, hexavalent chromium compounds, cyanides compounds, mercury and compounds thereof (including alkylmercury), selenium and compounds thereof, lead and compounds thereof, arsenic and compounds thereof, fluorine and compounds thereof, and boron and compounds thereof.
